(19)

Europäisches
Patentamt
European
Patent Office
Office européen
des brevets

(11) **EP 1 653 253 B1**

(12) **EUROPEAN PATENT SPECIFICATION**

(45) Date of publication and mention
of the grant of the patent:
**24.09.2008 Bulletin 2008/39**

(51) Int Cl.:
***G01V 5/00*** *(2006.01)*

(21) Application number: **05110196.2**

(22) Date of filing: **31.10.2005**

(54) **Electronic system and method for the recognition of materials**

Elektronisches System und Verfahren zur Materialerkennung

Système et procédé électronique pour l'indentification de matériaux

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **02.11.2004 IT MI20042085**

(43) Date of publication of application:
**03.05.2006 Bulletin 2006/18**

(73) Proprietor: **GILARDONI S.p.A.**
**20124 Milano (IT)**

(72) Inventors:
• **The inventors have agreed to waive their
entitlement to designation.**

(74) Representative: **De Gregori, Antonella et al
Ing. Barzano' & Zanardo Milano S.p.A.
Via Borgonuovo 10
20121 Milano (IT)**

(56) References cited:
**WO-A-99/08132** **US-A- 5 367 552**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to an electronic system and method for the recognition of objects by the determination of specific characteristics of the material of which they are composed.

In particular, the present invention relates to an electronic system and method for the recognition of materials which uses an X-ray scanning of the object and, by means of the image received from said scanning, determines the characteristics of the material by measuring the atomic number of the material itself.

The X-ray technology provides the possibility of determining various important characteristics of a material, i.e. its density and atomic number Z, or its equivalent atomic number Zeq if the material is made up of molecules. These two pieces of information can univocally identify a material, but in order for them to be revealed contemporaneously, two different types of sensors are required. In order to guarantee a reasonable compromise between costs and performances, most of the X-ray systems currently on the market only estimate the equivalent atomic number Zeq. Measurements of the absorption levels of the object examined in relation to two X-ray radiations, each characterized by having a different energy pattern, are used for obtaining this estimation.

Patent US 5,367,552 describes a system for recognizing objects effected by means of an X-ray radiation from which the densities of the objects subjected to said radiations are estimated.

Patent US 5,490,218 discloses a device and method for inspecting luggage based on the X-ray scanning of said luggage. In particular, in order to determine the presence of specific materials packed on top of each other inside said luggage, two X-rays with different energies are used for irradiating the objects and it is evaluated whether the difference in the attenuation of the energy of said rays can be attributed to the presence of a different quantity of said material on a certain predefined area.

Further relevant prior art is known from WO 9908132, which describes a radiation detector consisting of two detector arrays, that are responsive to high and low energy respectively, by absorbing radiation independently of each other. The detector arrays are placed side-by-side, either on the same side or on opposite sides of a printed circuit board. By receiving radiation directly, separately and independently, the two detector arrays can provide high selectivity for the two energy radiations. A filter is coupled to the high energy photodetector array to enhance the capability of the detector array to respond to the high energy radiation.

The Applicant has observed that with the known systems, as these are also capable of resolving possible cases of the overlying of different materials, the estimation is effected by means of empirical algorithms.

The Applicant proposes an electronic system and method, as set forth in the claims, for the recognition of objects, suitable for determining specific characteristics of a material, for example the atomic number, through the analysis of X-ray radiations emitted from a single source and detectable by a structure comprising at least two sensor units belonging to two different categories. In particular, the information relating to the characteristics of the material to be analyzed is obtained by measuring the absorption levels of the object examined in relation to two different pattern distributions obtained by selectively filtering a single beam of X-rays.

Furthermore, the model developed by the Applicant has demonstrated the non-linearity of the system and therefore the non-additivity of the absorptions in the case of the superimposition of different objects.

In order to solve the problem of superimpositions, the Applicant has developed a further model, which isolates non-linear phenomena from those which can be represented by a linear system. Furthermore, neural networks are used, or suitable parametric functions identified starting from experiments, to represent non-linear components of the system.

The system developed is a composite system which combines physical models, produced on the basis of experimental data, neural networks and image processing techniques. This system is capable of identifying the presence of dangerous substances in images coming from the X-ray scanning system, in the presence of various superimposed objects within the image.

One of the aspects of the present invention relates to an electronic system for the recognition of objects comprising an X-ray source, a support for the resting and/or moving of said objects, a detection structure of the radiations emitted from said source suitable for generating at least one digital X-ray of each object which is situated on said support, a processing unit, which receives and processes at least one digital image and displays it on at least one video unit, characterized in that said processing unit processes at least one digital image by means of an identification algorithm in order to extract specific information on the materials of which the object is composed and generates at least one resulting image in which each specific characteristic is revealed in a distinguishable manner.

A further aspect of the present invention relates to an electronic method for the recognition of objects comprising the following phases:

- subjecting said object to an X-ray scanning,
- revealing at least one low energy digital X-ray image and at least one high energy digital image, relating to a different energy pattern,

characterized in that it comprises the additional phases of:

- processing said high energy and low energy images so as to extract specific information on the materials of which the object is composed,
- generating at least one resulting image in which each specific characteristic is revealed in a distinguishable manner.

The characteristics and advantages of the system and method according to the present invention will appear more evident from the following illustrative and non-limiting description, of an embodiment with reference to the enclosed figures in which:

figure 1 is an overall scheme of the electronic system according to the invention;
figure 2 is a block scheme which illustrates the processing of the images which can be effected by the electronic system in figure 1 according to the present invention;
figure 3 illustrates a block scheme of the system which effects the calculation of the equivalent atomic number with the help of neural networks and a non-linear physical model.

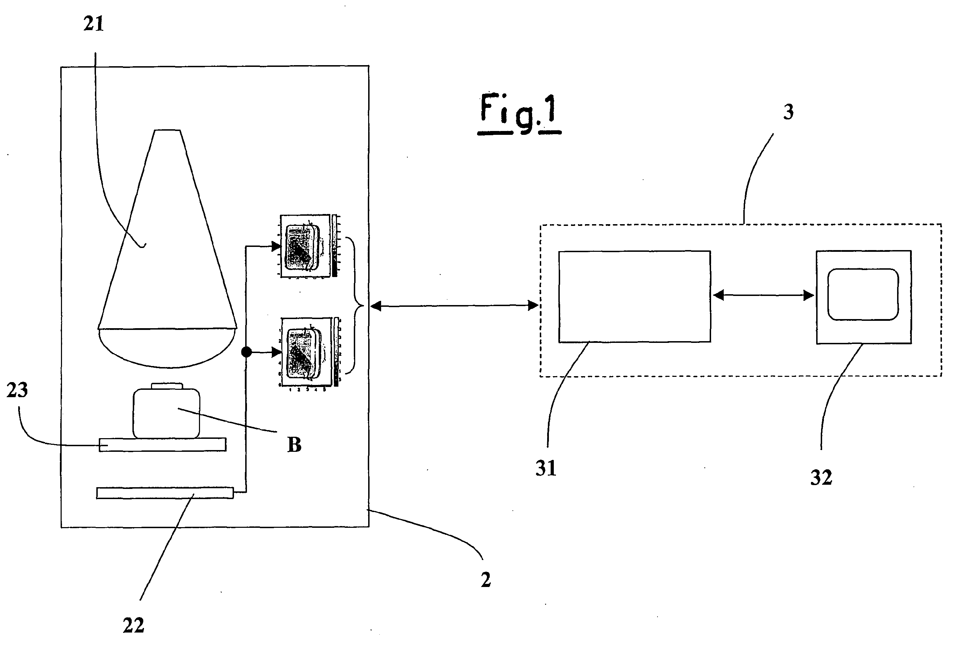

With reference to the above figures, the electronic system according to the present invention comprises an X-ray scanning unit (2) for at least one object B, which in figure 1 is illustratively represented by an item of luggage.

The scanning unit (2) comprises at least one X-ray source (21), a detection structure (22) of the radiations emitted from said source and a support (23) for sustaining and/or moving said objects. Said structure (22) is suitable for generating at least one digital X-ray image of each object which is situated on said support (23).

The X-ray image detection structure envisages the presence of at least two separate sensor units, each comprising a series of photodiodes parallel to each other, separated by a metallic filter. Each unit is suitable for detecting a pre-established pattern distribution of said rays.

In this way, each sensor unit supplies an X-ray image relating to a different energy pattern. These images and the data associated therewith are indicated hereunder as high energy images (H) and low energy images (L).

Said images are sent to a processing unit (3), typically a personal computer, which extracts specific information on the materials of which the object present in the images H and L is composed. Said processing unit comprises a calculation unit 31 and a display unit 32, typically comprising at least one video.

Said processing unit generates at least one resulting image in which each specific characteristic of the material or object analyzed in general, is shown in a distinguishable manner.

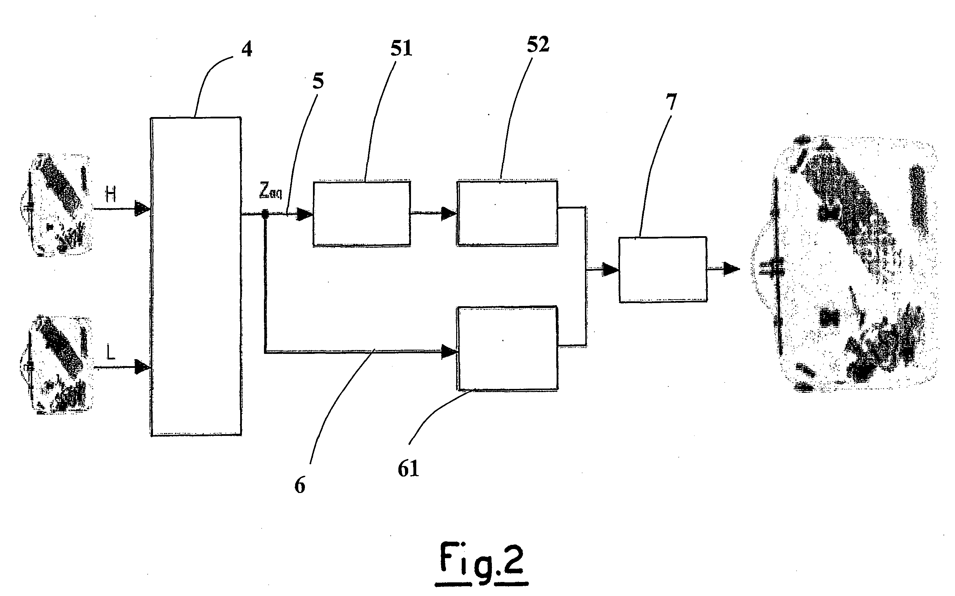

A block scheme of the identification algorithm according to the present invention is illustratively shown in figure 2.

Said algorithm comprises a first block (4) which, starting from the images H and L as mentioned above, uses a non-linear physical model for generating an equivalent image in which each point represents the equivalent atomic number Zeq or any identifying characteristic associated with the object under examination.

Said equivalent image is constructed by representing the values revealed by the two sensor units H and L in a plane which, for the purposes of the present invention, is defined as HL plane. In this plane, the coordinates *H* and *L,* which characterize the absorption of a material, are mapped in a point. In the case of zero absorption (absence of irradiated object) the coordinates correspond to the scale end value, for example using a 16 bit scale there would be (65535, 65535), whereas the case of maximum absorption (absence of radiation on the photodiodes) corresponds to the point (0, 0).

The representation space of the absorptions is defined as space hl by means of any transformation from a space HL to a space hl, as, for example, the following transformation:

$$1.1) \quad h = -\ln (H/H_{scale\ end}) \qquad 1.2) \quad l = -\ln (L/L_{scale\ end})$$

with $H_{scale\ end} = L_{scale\ end}$ = 65535 in the case of a 16 bit scale and the plane used for its representation plane hl.

In this zero absorption space (absence of irradiated object) the mapping is effected near the point (0, 0), whereas the maximum absorption case (absence of radiation on the photodiodes) corresponds, at the utmost, to the point $(+\infty, +\infty)$.

In the classical study of X-ray absorption phenomena, the irradiating source is presumed to be monochromatic. In reality, this characteristic is not respected by the X-ray generator tubes used in the control machines, which normally generate a polychromatic and continuous energy irradiation pattern. In the space hl, the absorption phenomena, in the case of monochromatic irradiation, are linear, whereas in the case of radiation generated by an X-ray tube, the linearity is no longer verified.

Each material is therefore characterized not by a straight line but by a curve; this curve can be described by a functional non-linear bond between *h* and *l*:

$$2.1) \quad h = h(l)$$

In order to define the function bond between *h* and *l* according to the present invention, a model is used, which represents an extension of the second order of linear model, valid in the case of monochromatic irradiation; for illustrative purposes, reference can be made to the generic function of the 2° order:

$$2.2) \quad h(l) = a.l^2 + b.l + c$$

Observing that, in the space *hl*, if *l* = 0, then *h* must also = 0, it can be deduced that c = 0. By effecting various experimental detections, with a series of different materials, a group of curves is obtained not yet bound to the atomic number.

Generalizing, let us express the variables a and b as belonging to a unit $\gamma_i$ so that:

$$2.3) \quad h = h(l, \gamma_1, \gamma_2 \ldots \gamma_i)$$

Each $\gamma_i$ is a function of *z,* approximating them from functions having $m_i$ parameters, selected so as to guarantee the reversibility to z of the model:

$$2.4) \quad \gamma_i = f(z, m_1, m_2, \ldots m_i)$$

It is therefore possible to return to a formulation of the type:

$$2.5) \quad z = f(h,l)$$

With these hypotheses, it is possible to state that the parameters a and b of the model 2.2 are functions of the atomic number z:

$$2.3) \quad a = a(z)$$

$$b = b(z)$$

As a model for these unknown functions, the generic model of the first order is presumed, as an example:

$$2.4) \quad a(z) = m_a . z + q_a$$

$$b(z) = m_b . z + q_b$$

By substituting this in 1.2), we obtain, with c = 0:

$$2.5) \quad h(l) = (m_a . z + q_a) . l^2 + (m_b . z + q_b) . l$$

The model is therefore based on 4 parameters: $m_a$, $m_b$, $q_a$, $q_b$.
These parameters are obtained by effecting a minimization with the square minimums, in the space *h*, *l* and *z*,

of the model, using the data relating to the experimental detections specified above.

The atomic number is an index which can be obtained by inversion, if integrated in the parameters of the model represented in the formula 2.5).

$$2.6) \quad z = h - q_a.l^2 - q_b.l \: / \: m_a.l^2 + m_b.l$$

The model therefore enables us to calculate an atomic number measurement, starting from the measurement of the irradiation energies absorbed by the materials (H and L) represented in the transformed plane *hl*.

Once the equivalent atomic number of each point of the image has been determined in this way, the processing flow of the algorithm is divided into two branches as illustrated in figure 2.

The calculation of the atomic number is split into two distinct branches in order to treat the recognition of materials superimposed with others distinctly from those of the materials to be identified without superimpositions.

A first branch 5 deals with the identification of dangerous substances when they are superimposed with other types of substances. This operation is substantially effected through two successive steps. A segmentation block (51) divides the image Zeq into segments and the representative high and low energy values are calculated for each segment. An analysis block (52) analyzes the segments in pairs, considering one as the base of a possible superimposition and the other as consisting of this base plus the material to be identified (target). The result of this analysis is a map which indicates, for each segment, a function of the number of times that it has been identified as dangerous. The function of the number of times that a certain segment has been classified as dangerous, forms its grade or danger index.

A second processing branch (6), on the other hand, identifies the presence of dangerous materials in the absence of superimpositions. The identification is effected by an identification block (61) by making direct use of the Zeq measurements provided by the Zeq image. In particular, the segmentation of the image is first effected, i.e. the subdivision of the digital image in various compact sub-units of adjacent pixels. The effective calculation of $Z_{eq}$ is then effected according to the procedure described above, also applying it to the average coordinates H and L of the portions of image obtained by the segmentation. The segments having a Zeq which can be associated with that of a material to be detected, are marked.

The results of the two processing processes in the two branches are finally further processed by means of a selection block 7) of the areas or regions identified as dangerous, and which generates an image at the output in which these areas are indicated. In particular, the segments are handled and optimized in relation to the dimensions, number and grades.

In order to resolve the superimpositions between different materials, the non-linear phenomena that the physical model describes must be compensated.

The measurements of the absorptions relating to the base material are known ($L_{base}$ and $H_{base}$) as well as that of the agglomerate consisting of this base and the superimposed material to be identified (L and H).

In order to calculate in corrective terms, it is first of all necessary to effect a linear subtraction between the absorptions of the agglomerate and the base, and then estimate a corrective term for the energy H ($\Delta H$), which brings the coordinates ($H-H_{base}-\Delta H$, $L-L_{base}$) to those having a quantity of superimposed material to be identified when it is observed with respect to the void and has a low energy absorption equal to ($L-L_{base}$).

Once the effects of the second order have been resolved, the calculation of the Zeq measurement is effected with the physical law described in our model, therefore considering the material as if it were in the void.

For the calculation of the corrective term $\Delta H$, neural networks are used, or suitable parametric functions identified starting from experiments, which receive as input the coordinates H and L of the material forming the base and that forming the target, and returns a corrected H distribution as output or result.

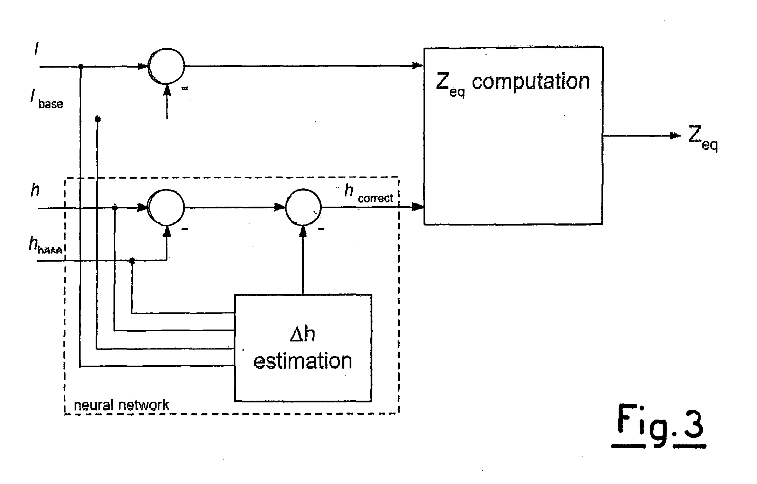

It is possible to see the scheme in the block diagram of Figure 3, where neural networks are used for the new distribution of the corrected h. Neural networks or suitable parametric functions identified starting from experiments, are used, by training them so as to avoid overfitting problems, i.e. an overfitting with the experimental data used for the training, and therefore guaranteeing the generality of the networks thus obtained, as indicated in specific literature.

In short, the present invention allows an effective measurement of the atomic number to be determined, and not a digital estimation based on comparative empirical systems with known materials (for illustrative but non-limiting purposes, we can cite materials such as boron and iron agglomerates). Furthermore, the physical model has shown how the absorption phenomena of radiations distributed on an energy pattern, are of the non-linear type. The resolution of superimpositions between different materials, due to non-linear phenomena, has required the development of a compensation method based on the use of trained neural networks with superimpositions of materials selected so as to uniformly cover a sufficient range of atomic numbers for discriminating materials classified as dangerous.

**Claims**

1. An electronic system for the recognition of objects comprising

   an X-ray source (21),
   a support (23) for the resting and/or moving of said objects (B),
   a detection structure (22) of the radiations emitted from said source suitable for generating at least one digital X-ray of each object which is situated on said support,
   a processing unit (3), which receives, processes at least one digital image and displays it on at least one video unit (32),
   said processing unit processes said at least one digital image by means of an identification algorithm in order to extract specific information on the materials of which the object is composed and generates at least one resulting image in which each specific characteristic is distinguishably revealed,
   the detection structure of X-ray images comprises at least two separate sensor units, each including a series of photodiodes parallel to each other, separated by a metallic filter
   each unit is suitable for revealing a predetermined pattern distribution of said X-rays so that one unit supplies a low energy X-ray image (L) and the other a high energy image (H), relating to a different energy pattern
   **characterized in that**
   said identification algorithm comprises a first processing block which, starting from low and high energy images, uses a non-linear physical model to generate an equivalent image in which each point represents the equivalent atomic number Zeq.

2. The system according to claim 1, wherein said identification algorithm downstream of said first block in a first processing branch (5) has a segmentation block (51) in series which divides the Zeq image into areolas, hereinafter indicated as segments, and calculates the representative high and low energy values for each segment, and an analysis block (52) which analyses the segments in pairs or sub-units, considering one or more as the base of a possible superimposition and the other, or others, as consisting of a combination of this base and the material to be identified, so as to generate a map which indicates, for each segment, the number of times it has been identified as dangerous.

3. The system according to claim 1, wherein said identification algorithm downstream of said first block in a second processing branch (6), for handling cases without superimposition, has an identification block (61) where the segmentation of the image is effected, i.e. the subdivision of the digital image into various compact sub-units of adjacent pixels, and the effective calculation of the information relating to the Zeq atomic number is then calculated.

4. The system according to claim 1, wherein the results of the two processing processes in the two branches are finally further processed by means of a selection block (7) of the areas or regions identified as dangerous, and which generates an image at the output in which these areas are revealed.

5. The system according to claim 1, wherein said first processing block determines information relating to the equivalent atomic number Zeq of the material of which the object is composed in each point of the digital X-ray image, using artificial neural networks or suitable parametric functions identified starting from experiments.

6. An electronic method for the recognition of objects comprising the following phases:

   subjecting said object to an X-ray scanning, revealing at least one low energy digital X-ray image (L) and at least one high energy digital image (H), relating to a different energy pattern,
   processing said high energy and low energy images so as to extract specific information on the materials of which the object is composed, generating at least one resulting image in which each specific characteristic is revealed in a distinguishable manner,

   **characterized in that**
   said processing high energy and low energy images phase comprises calculating the information relating to the equivalent atomic number Zeq of the material of which the object is composed in each point of the digital X-ray image using artificial neural networks or suitable parametric functions starting from experimental examples.

7. The method according to claim 6, comprising the phase of splitting the calculation of the Zeq information into two distinct branches so as to distinguish superimposed materials from others or homogeneous materials without superimpositions.

8. The method according to claim 7, wherein the following phases are effected in a first branch: dividing the Zeq image into areolas, hereinafter indicated as segments, and for each segment calculating the representative high and low energy values analysing the segments in pairs or sub-units, considering one or more as the base of a possible superimposition and the other or others as consisting of a combination of this base and the material to be identified (target), generating a map which indicates, for each segment, a function of the number of times it has been identified as dangerous.

9. The method according to claim 7, wherein the following phases are effected in a second branch dividing the image into segments, i.e. into various compact sub-units of adjacent pixels, effecting the effective calculation of the Zeq information of each segment.

10. The method according to claim 7, wherein, starting from the processings effected in said two branches, a selection of the areas or regions identified as dangerous is effected so as to generate said at least one resulting image.

**Patentansprüche**

1. Elektronisches System zur Erkennung von Gegenständen mit einer Röntgenstrahlenquelle (21),

einer Auflage (23) zur Lagerung und/oder zum Bewegen eines Gegenstandes (B),
einer Erfassungsstruktur (22) der Strahlungen, die von der Röntgenstrahlenquelle ausgesendet werden und die zur Erzeugung von mindestens einer digitalen Röntgenstrahlenaufnahme jedes Gegenstandes dienen, der auf der Auflage angeordnet ist,
einer Rechnereinheit , die empfängt, mindestens eine digitale Aufnahme errechnet und sie auch zumindest auf einer Videoeinheit (32) darstellt,

wobei die Rechnereinheit (3) die zumindest eine digitale Aufnahme mit den Mitteln eines Identifikationsalgorithmus errechnet, um besondere Information über die Materialien, aus denen der Gegenstand besteht, zu ermitteln und die zumindest eine resultierende Aufnahme erzeugt, in welcher jedes besondere Charakteristikum unterscheidbar offenbart ist,
wobei die Erfassungsstruktur von Röntgenstrahlenaufnahmen zumindest zwei separate Sensoreinheiten aufweist, die jeweils eine Reihe von parallel zueinander angeordneten Fotodioden beinhalten und die durch einen metallischen Filter getrennt sind,
wobei jede Einheit zur Offenlegung eines vorbestimmten Verteilungsmusters von Röntgenstrahlen dient, sodass eine Einheit eine Niedrigenergie-Röntgenstrahlenaufnahme (L) und die andere eine Hochenergie-Röntgenstrahlenaufnahme (H) liefert, die sich auf ein anderes Energiemuster bezieht, **dadurch gekennzeichnet, dass** der Identifikationsalgorithmus einen ersten Rechnerblock aufweist, der, beginnend bei Niedrig- und Hochenergieaufnahmen, ein nicht lineares physikalisches Modell verwendet, um eine äquivalente Aufnahme, in der jeder Punkt eine äquivalente Atomanzahl Zeq repräsentiert, zu erzeugen.

2. System nach Anspruch 1, wobei der Identifikationsalgorithmus in einer ersten Rechnerverzweigung (5) leitungsabwärts des ersten Blocks einen seriell geschalteten Segmentierungsblock (51), der die Zeq-Aufnahme in Abschnittshöfe unterteilt, im folgenden als Segmente bezeichnet, und die repräsentativen Hoch- und Niedrigenergiewerte für jedes Segment errechnet, und einen Analyseblock (52) aufweist, der die Segmente in Paare oder Untereinheiten analysiert, wobei er eines oder mehrere als Basis einer möglichen Überlagerung und den oder die anderen als bestehend aus einer Kombination aus dieser Basis und dem zu identifizierenden Material in Betracht zieht, um eine Karte zu generieren, die für jedes Segment die Anzahl anzeigt, mit der es als gefährlich eingestuft worden ist.

3. System nach Anspruch 1, wobei der Identifikationsalgorithmus leitungsabwärts bezüglich des ersten Blockes in einer zweiten Rechnerverzweigung (6) einen Identifikationsblock (61) zur Handhabung von Fällen ohne Überlagerung aufweist, wo die Segmentierung der Aufnahme betroffen ist, d.h. es wird dann die Unterteilung der digitalen Aufnahme in verschiedene kompakte Untereinheiten von benachbarten Pixeln und die effektive Berechnung der Information, die sich auf die Zeq Atomanzahl bezieht, berechnet.

4. System nach Anspruch 1, wobei die Ergebnisse der zwei Rechenschritte in den zwei Verzweigungen abschließend weiter mittels eines Selektionsblockes (7) von den Bereichen oder Regionen, die als gefährlich eingestuft worden sind, berechnet werden, und der eine Aufnahme am Ausgang erzeugt, in welcher diese Bereiche offengelegt sind.

5. System nach Anspruch 1, wobei der erste Rechnerblock Information bezüglich der äquivalenten Atomanzahl Zeq des Materials aus dem der Gegenstand besteht, in jedem Punkt der digitalen Röntgenstrahlenaufnahme unter Verwendung eines künstlichen neuralen Netzwerkes oder angemessener parametrischer Funktionen bestimmt, die aus einem experimentellen Ansatz heraus ermittelt werden.

6. Elektronisches Verfahren zur Erkennung von Gegenständen mit die folgenden Schritte:

Unterziehen des Gegenstandes eines Röntgenstrahlenabtastvorganges, Durchführen zumindest einer digitalen Niedrigenergie-Röntgenstrahlenaufnahme (L) und zumindest einer digitalen Hochenergieaufnahme (H), die sich auf ein anderes Energiemuster bezieht,
Verarbeiten der Hochenergie- und der Niedrigenergieaufnahmen, um die besondere Information über die Materialien, aus denen der Gegenstand aufgebaut ist, zu ermitteln,
Erzeugen von zumindest einer resultierenden Aufnahme in der jedes besondere Charakteristikum in einer unterscheidbaren Weise offenbart ist,

**dadurch gekennzeichnet, dass**
der Schritt des Verarbeitens der Hochenergie- und der Niedrigenergieaufnahmen das Berechnen der Information bezüglich der äquivalenten Atomanzahl Zeq des Materials, aus dem der Gegenstand aufgebaut ist, in jedem Punkt der digitalen Röntgenstrahlenaufnahme unter Verwendung künstlicher neuraler Netzwerke oder angemessener parametrischer Funktionen, die aus experimentellen Beispielen gewonnen werden, umfasst.

7. Verfahren gemäß Anspruch 6, mit dem Schritt des Aufteilens der Berechnung der Zeq-Information in zwei unterschiedliche Verzweigungen, um übereinander gelagerte Materialien von anderen oder homogenen Materialien ohne Überlagerungen zu unterscheiden.

8. Verfahren nach Anspruch 7, wobei die folgenden Schritte in der ersten Verzweigung erfolgen: Teilen der Zeq-Aufnahme in Bereichsabschnitte, im folgenden bezeichnet als Segmente, und Berechnen der repräsentativen Hoch- und Niedrigenergiewerte für jedes Segment durch Analyse der Segmente in Paaren oder Untereinheiten, in Betracht ziehen eines oder mehrerer als Basis für eine mögliche Überlagerung und das oder die anderen als bestehend aus einer Kombination aus dieser Basis und dem zu identifizierenden Material (Target), Erzeugen einer Karte, die für jedes Segment eine Funktion der Anzahl anzeigt, derzufolge es als gefährlich eingestuft worden ist.

9. Verfahren nach Anspruch 7, wobei die folgenden Schritte in der zweiten Verzweigung erfolgen: Teilen der Aufnahme in Segmente, d.h. in verschiedene kompakte Untereinheiten von benachbarten Pixeln, Durchführen der effektiven Berechnung der Zeq-Information jedes Segments.

10. Verfahren gemäß Anspruch 7, wobei eine Auswahl von den Bereichen oder Regionen, die als gefährlich eingestuft worden sind, beginnend von den Verfahrensschritten erfolgt, die in den beiden Verzweigungen erfolgen, um zumindest eine resultierende Aufnahme zu erzeugen.

## Revendications

1. Système électronique pour la reconnaissance d'objets, comprenant

une source de rayons X (21),
un support (23) pour déposer et/ou déplacer lesdits objets (B),
une structure de détection (22) des rayonnements émis par ladite source convenant à la génération d'au moins un rayon X numérique de chaque objet qui est situé sur ledit support, une unité de traitement (3) qui reçoit, traite au moins une image numérique et l'affiche sur au moins une unité vidéo (32),
ladite unité de traitement traite ladite au moins une image numérique à l'aide d'un algorithme d'identification pour extraire des informations spécifiques sur les matériaux dont l'objet est composé et génère au moins une image obtenue, dans laquelle chaque caractéristique spécifique est révélée de manière distincte,
la structure de détection d'images de rayons X comprend au moins deux unités de capteur séparées, comprenant chacune une série de photodiodes parallèles l'une à l'autre, séparées par un filtre métallique,
chacune unité convient à la révélation d'une distribution de motifs prédéterminée desdits rayons X de sorte qu'une seule unité fournisse une image de rayons X de basse énergie (L) et l'autre une image de haute énergie (H), concernant un motif d'énergie différent,

**caractérisé en ce que**
ledit algorithme d'identification comprend un premier bloc de traitement qui, en partant d'images de basse et haute énergie, utilise un modèle physique non linéaire pour générer une image équivalente, dans laquelle chaque point représente le nombre atomique équivalent Zeq.

2. Système selon la revendication 1, dans lequel ledit algorithme d'identification en aval dudit premier bloc d'une première branche de traitement (5) présente un bloc de segmentation (51) en série qui divise l'image Zeq en aréoles, désignées ci-dessous par segments, et calcule les valeurs représentatives de haute et basse énergie pour chaque segment, et un bloc d'analyse (52) qui analyse les segments par paires ou sous-unités, en en considérant un ou plusieurs comme la base d'une superposition possible et l'autre ou les autres comme faisant partie d'une combinaison de cette base et du matériau à identifier, de manière à générer une carte qui indique, pour chaque segment, le nombre de fois qu'il a été identifié comme dangereux.

3. Système selon la revendication 1, dans lequel ledit algorithme d'identification en aval dudit premier bloc d'une seconde branche de traitement (6), pour manipuler des cas sans superposition, présente un bloc d'identification (61) où la segmentation de l'image est effectuée, c'est-à-dire la subdivision de l'image numérique en diverses sous-unités compactes de pixels adjacents, et le calcul efficace des informations concernant le nombre atomique Zeq est ensuite effectué.

4. Système selon la revendication 1, dans lequel les résultats des deux processus de traitement dans les deux branches sont enfin encore traités à l'aide d'un bloc de sélection (7) des zones ou des régions identifiées comme dangereuses et qui génère une image à la sortie où ces zones sont révélées.

5. Système selon la revendication 1, dans lequel ledit premier bloc de traitement détermine des informations concernant le nombre atomique équivalent Zeq du matériau dont l'objet est composé en chaque point de l'image numérique de rayons X, en utilisant des réseaux neuraux artificiels ou des fonctions paramétriques appropriées identifié(e)s en partant d'expériences.

6. Procédé électronique pour la reconnaissance d'objets, comprenant les phases suivantes :

   on soumet ledit objet à un balayage de rayons X en révélant au moins une image numérique de rayons X de basse énergie (L) et au moins une image numérique de haute énergie (H), concernant un motif d'énergie différent, on traite lesdites images de haute et basse énergie de manière à extraire des informations spécifiques sur les matériaux dont l'objet est composé, en générant au moins une image obtenue, dans laquelle chaque caractéristique est révélée de manière distincte,

**caractérisé en ce que**
ladite phase de traitement d'images de haute et basse énergie comprend le calcul des informations concernant le nombre atomique équivalent Zeq du matériau dont l'objet est composé en chaque point de l'image numérique de rayons X en utilisant des réseaux neuraux artificiels ou des fonctions paramétriques appropriées en partant d'exemples expérimentaux.

7. Procédé selon la revendication 6, comprenant la phase de division du calcul des informations relatives au Zeq en deux branches distinctes de manière à distinguer les matériaux superposés des autres matériaux ou des matériaux homogènes sans superpositions.

8. Procédé selon la revendication 7, dans lequel les phases suivantes sont effectuées dans une première branche : on divise l'image Zeq en aréoles, désignées ci-après par segments, et, pour chaque segment, on calcule les valeurs représentatives de haute et basse énergie en analysant les segments par paires ou par sous-unités, on en considère un ou plusieurs d'entre eux comme la base d'une superposition possible et l'autre ou les autres comme faisant partie d'une combinaison de cette base et du matériau à identifier (cible), on génère une carte qui indique, pour chaque segment, une fonction du nombre de fois où on l'a identifié comme dangereux.

9. Procédé selon la revendication 7, dans lequel les phases suivantes sont effectuées dans une second branche : on divise l'image en segments, c'est-à-dire en diverses sous-unités compactes de pixels adjacents, et on effectue le calcul efficace des informations relatives au Zeq de chaque segment.

10. Procédé selon la revendication 7, dans lequel, en partant des traitements effectués dans lesdites deux branches, on effectue une sélection des zones ou des régions identifiées comme dangereuses de manière à générer ladite au moins une image obtenue.

**21**

**23**

**22**

B

**2**

Fig.1

**3**

**31**

**32**

EP 1 653 253 B1

EP 1 653 253 B1

**Fig.2**

Fig.3

EP 1 653 253 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5367552 A
- US 5490218 A

- WO 9908132 A